# EUROPEAN PATENT APPLICATION

(11) **EP 3 021 082 A1**
(43) Date of publication of application: **18.05.2016**
(21) Application number: 14782294.4
(22) Date of filing: 16.04.2014
(51) Int. Cl.: G01C 21/00, H04W 4/02, H04L 29/08

(54) **METHOD, SERVER, TERMINAL, SYSTEM, AND STORAGE MEDIUM FOR DISPLAYING MULTIUSER MAP**

(30) Priority: 12.07.2013 CN 201310294061
(71) Applicant: ZTE Corporation, Shenzhen, Guangdong 518057 (CN)
(72) Inventor: XIAN, Yi, Shenzhen Guangdong 518057 (CN)
(74) Representative: Tischner, Oliver
(86) International application number: PCT/CN2014/075515
(87) International publication number: WO 2014/166437

(57) **Abstract**

Provided are a method, system, server and terminal, and storage medium for displaying a multiuser map. The method comprises: receiving a lookup message of a current smart terminal for looking up current location information of a to-be-looked-up smart terminal (12), using an identifier of the to-be-looked-up smart terminal carried in the lookup request message to look up the current location information of the to-be-looked-up smart terminal, and notifying the current smart terminal (13). Utilization of the method allows for geographical locations of multiple users to be displayed on a same smart terminal, thus providing a traveller with convenience, increasing the practicability and convenience of the smart terminal, and enhancing visual experience for a user of the smart terminal.

## Description

### TECHNICAL FIELD

The disclosure relates to the technology of electronic map, and in particular to a method, server, terminal, system and storage medium for displaying a multiuser map.

### BACKGROUND

An electronic map is a map digitally stored and looked up by virtue of a computer technology. An electronic map may be built in a terminal, such as a mobile phone or a laptop computer, and is convenient to carry and has powerful functions; and in addition, a display effect may not be influenced by operations of scaling up, scaling down, rotation and the like on the map, and the electronic map may be preferred by the masses of users, and is a good assistant necessary for travelling of the users.

At present, all smart terminals, such as smart phone, Personal Digital Assistant (PDA), Internet Personal Access Device (IPAD) and Personal Computer (PC), on the current market have a location function. After an electronic map client is installed, with the location function, a user may view information on its own geographical location and information on a geographical location of a travel destination on a smart terminal, as well as a content such as a distance between its geographical location and the destination and a travel route, so that convenience is brought to the travelling of the user. However, existing electronic map services can only display the location information of the user on the smart terminal, but not a geographical location of an interested user, such as a friend and a family member. For example, if three users who have made an appointment to play in a strange place get lost, it is very difficult for the users to clearly describe their own locations and identify the locations of the other users only by making calls, great inconvenience being brought to travelling of the users.

### SUMMARY

In view of this, the embodiments of the disclosure consist in providing a method, server, terminal, system, and storage medium for displaying a multiuser map, which may provide a traveller with convenience, improve practicability and convenience of smart terminals and improve a visual experience for a user of the smart terminal.

The technical solutions of the embodiments of the disclosure are implemented as follows.

An embodiment of the disclosure provides a method for displaying a multiuser map, which includes:
after a lookup request is received from a smart terminal, current location information of a to-be-looked-up smart terminal is looked up according to an identifier of the to-be-looked-up smart terminal in the lookup request, and the location information is notified to the smart terminal.

In the solution, the method may further include that: before the lookup request is received from the smart terminal,
it is determined that a friend relationship is established between the smart terminal and the to-be-looked-up smart terminal.

In the solution, the method may further include that: before the lookup request is received from the smart terminal,
it is determined that the smart terminal and the to-be-looked-up smart terminal are both registered in a same communication system.

In the solution, the step that the current location information of the to-be-looked-up smart terminal is looked up may include that:
latest location information which is reported by the to-be-looked-up smart terminal and registered in the communication system is determined as the current location information of the to-be-looked-up smart terminal.

An embodiment of the disclosure further provides a server, which includes: a receiving unit, a lookup unit and a notification unit, wherein
the receiving unit is configured to receive a lookup request for current location information of a to-be-looked-up smart terminal from a smart terminal, and trigger the lookup unit;
the lookup unit is configured to look up the current location information of the to-be-looked-up smart terminal according to an identifier of the to-be-looked-up smart terminal in the lookup request; and
the notification unit is configured to notify the current location information of the to-be-looked-up smart terminal to the smart terminal which initiates the lookup request.

In the solution, the server may further include: a determination unit, configured to determine that a friend relationship is established between the smart terminal and the to-be-looked-up smart terminal.

In the solution, the determination unit may further be configured to determine that the smart terminal and the to-be-looked-up smart terminal are both registered in a same communication system.

In the solution, the lookup unit may further be configured to determine latest location information which is reported by the to-be-looked-up smart terminal and registered in the communication system as the current location information of the to-be-looked-up smart terminal.

An embodiment of the disclosure further provides a computer storage medium, in which computer-executable instructions are stored, the computer-executable instructions being configured to execute the method for displaying a multiuser map as described above.

An embodiment of the disclosure further provides a method for displaying a multiuser map, which includes that:
a lookup request for current location information of a to-be-looked-up smart terminal is initiated; and
the current location information of the to-be-looked-up smart terminal is received and displayed.

An embodiment of the disclosure further provides another computer storage medium, in which computer-executable instructions are stored, the computer-executable instructions being configured to execute the method for displaying a multiuser map as described above.

An embodiment of the disclosure further provides a smart terminal, which includes: an initiation unit and a receiving and display unit, wherein
the initiation unit is configured to initiate a lookup request for current location information of a to-be-looked-up smart terminal; and
the receiving and display unit is configured to receive and display the current location information of the to-be-looked-up smart terminal.

An embodiment of the disclosure further provides a system for displaying a multiuser map, which included: a server and a smart terminal, wherein
the smart terminal is configured to initiate a lookup request for current location information of an to-be-looked-up smart terminal, and
receive and display the current location information of the to-be-looked-up smart terminal; and
the server is configured to receive the lookup request, look up the current location information of the to-be-looked-up smart terminal according to an identifier of the to-be-looked-up smart terminal in the lookup request, and notify the current location information to the smart terminal.

According to the method, server, terminal and system for displaying a multiuser map provided by the embodiments of the disclosure, after receiving a lookup request of a smart terminal, the server looks up current location information of a to-be-looked-up smart terminal according to an identifier of the to-be-looked-up smart terminal in the lookup request, and notifies the location information to the smart terminal. Utilization of the method allows for geographical locations of multiple users to be displayed on a same smart terminal, thus providing a traveller with convenience, increasing the practicability and convenience of the smart terminal, and enhancing visual experience for a user of the smart terminal..

### BRIEF DESCRIPTION OF THE DRAWINGS

Fig. 1 is a flowchart of a method for displaying a multiuser map according to an embodiment of the disclosure;
Fig. 2 is a diagram of a specific embodiment of a method for displaying a multiuser map according to the disclosure;
Fig. 3 is a diagram of another specific embodiment of a method for displaying a multiuser map according to the disclosure;
Fig. 4 is a diagram of yet another specific embodiment of a method for displaying a multiuser map according to the disclosure;
Fig. 5(a) is a schematic diagram of a structure of a system for displaying a multiuser map according to an embodiment of the disclosure;
Fig. 5(b) is a schematic diagram of a structure of a smart terminal according to an embodiment of the disclosure; and
Fig. 5(c) is a schematic diagram of a structure of a server according to an embodiment of the disclosure.

### DETAILED DESCRIPTION

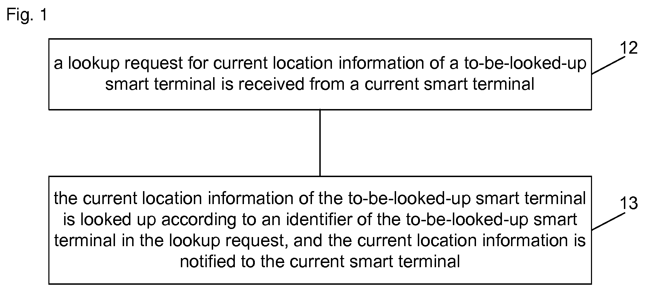

The embodiment of the disclosure records a method for displaying a multiuser map. As shown in Fig. 1, the method includes:
Step 12: a server receives a lookup request for current location information of a to-be-looked-up smart terminal from a current smart terminal such as a smart phone (called a current mobile phone for short in the embodiment).

It should be noted that a specific embodiment of the disclosure includes at least two smart terminals (the current mobile phone and at least one to-be-looked-up mobile phone) and a server. Each of the smart terminals has a location function for its geographical location. The smart terminals may also be PCs, PDAs and IPADs, besides smart phones, which communicate with the server through clients with the location function thereon. The smart terminals further have a human-machine interaction interface.

The location information includes: a geographical location of the to-be-looked-up smart terminal, a distance and route between the to-be-looked-up smart terminal and the current smart terminal, and the like.

Before Step 12, the method further includes:
Step 10: the current smart terminal and the to-be-looked-up smart terminal are both registered in a same communication system, specifically in a same server.

When the current smart terminal and the to-be-looked-up smart terminal are registered in the same server, the server may store user information of the current smart terminal and of the to-be-looked-up smart terminal. The user information includes: a corresponding relationship among a username, password, communication number, Subscriber Identity Module (SIM) sequence number and the like of the smart terminal. The identifier of the smart terminal includes: a factory unique equipment identifier, SIM sequence number, communication number and the like of the smart terminal.

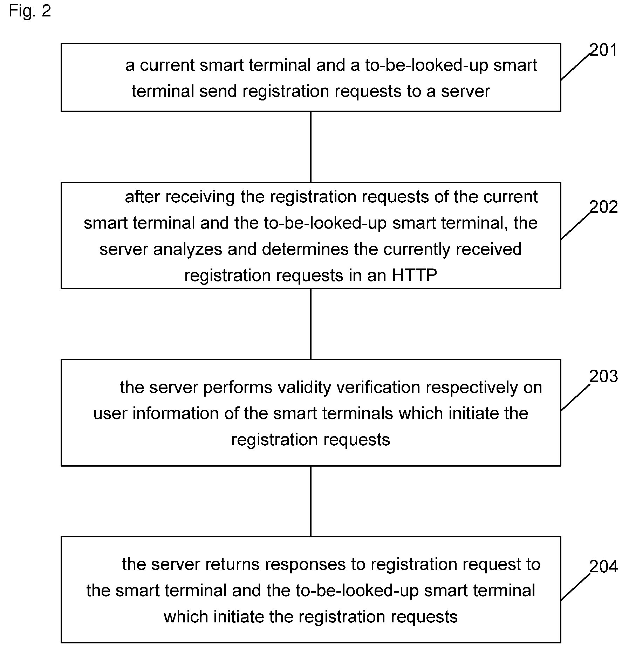

Fig. 2 is a diagram of a specific embodiment of Step 10 according to the disclosure. Step 10 is further described with reference to Fig. 2.

A current smart terminal such as a mobile phone A and a to-be-looked-up smart terminal such as a mobile phone B accessing a network side for the first time have to be registered ina server.

Step 201: the current smart terminal and the to-be-looked-up smart terminal send registration requests to the server, wherein the registration requests are carried in a Hypertext Transfer Protocol (HTTP) for transmission.

Here, the mobile phones A and B send the registration requests containing user information of corresponding mobile phones to the server.

Step 202: after receiving the registration requests from the current smart terminal and the to-be-looked-up smart terminal, the server analyzes and determines the registration requests in the HTTP.

Here, after receiving the registration requests from the mobile phones A and B, the server analyzes and determines the registration requests in the HTTP.

Step 203: the server performs validity verification on the user information of the smart terminals which have initiated the registration requests.

Here, validity verification is performed on the user information of the mobile phone A and the user information of the mobile phone B respectively, and the user information of the smart terminals which has passed validity verification is stored in a database.

For example, problems such as whether a username of the mobile phone A is valid and the same as that of another mobile phone or not are checked, and the user information of the mobile phone is stored in the database after the validity verification of the terminal.

Here, a space for user information is created in the database for each mobile phone user, and is configured to store the user information of each smart terminal.

Step 204: the server returns responses to registration request to the smart terminals which initiate the registration requests.

Here, the server returns a response to registration request of the mobile phone A to the mobile phone A, and returns a response to registration request of the mobile phone B to the mobile phone B; and

The responses to registration request indicate that the smart terminals which have initiated the registration requests have been successfully registered in the server.

Preferably, after Step 10 and before Step 12, the method further includes:
Step 11: the server determines that a friend relationship is established between the current smart terminal and the to-be-looked-up smart terminal.

A process of establishing the friend relationship between the current smart terminal and the to-be-looked-up smart terminal refers to the following processing flow.

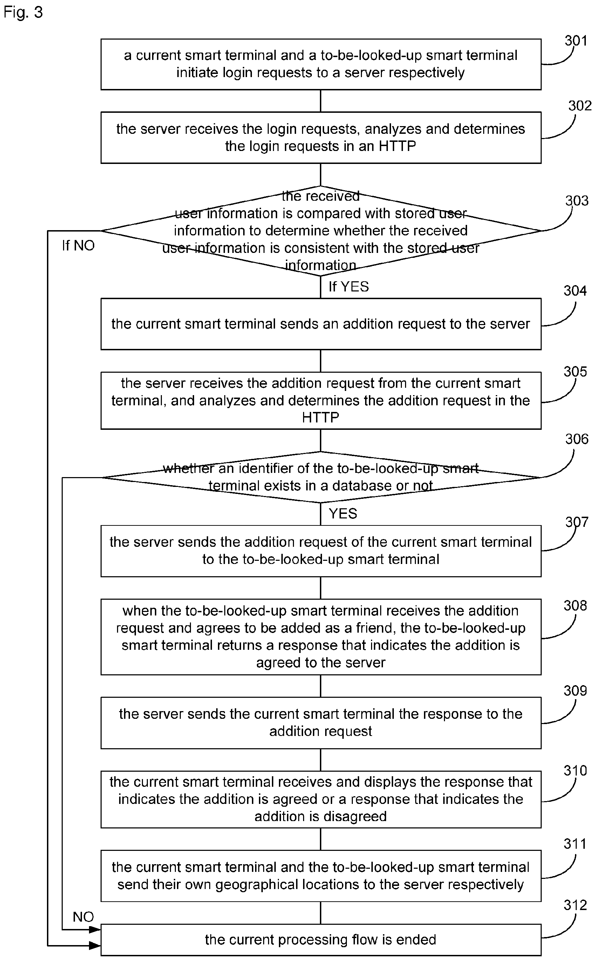

Specifically, Fig. 3 is a diagram of a specific embodiment of Step 11 according to the disclosure. Step 11 is further described with reference to Fig. 3.

Here, the condition where the mobile phone A as the current smart terminal is intended to add the mobile phone B as the to-be-looked-up smart terminal as a friend is taken as an example for description.

Step 301: the current smart terminal and the to-be-looked-up smart terminal initiate login requests to the server respectively.

Here, the mobile phone A and the mobile phone B initiate the login requests to the server respectively; and the login request messages are carried in the HTTP for transmission.

Wherein the login request of the mobile phone A contains: the user information of the mobile phone A, such as a username and a password; and the login request of the mobile phone B contains: the user information of the mobile phone B, such as a username and a password.

Step 302: the server receives the login requests, analyzes and determines the login requests in the HTTP.

Step 303: the server compares the user information of the terminals in the received login requests with the user information of the corresponding terminals in the database; the flow goes to Step 304 if the user information is consistent; otherwise the flow goes to Step 312.

Here, since the mobile phone A and the mobile phone B have been registered in the same server, said server stores the user information used during registration of the mobile phone A and the mobile phone B. The user information of the mobile phone A in the login request message of the mobile phone A is compared with the user information of the mobile phone A in the database. When the user information is consistent, a response to login request which indicates that login of the mobile phone A is agreed is returned to the mobile phone A.

The server compares the user information of the mobile phone B in the login request of the mobile phone B with the user information of the mobile phone B in the database. When the user information is consistent, a response to login request which indicates that login of the mobile phone B is agreed is returned to the mobile phone B.

When the server determines that the user information of the smart terminals which initiate the login requests is inconsistent with the user information, stored in the database, of the corresponding smart terminals, the server returns responses which indicate that login of the smart terminals is rejected, or prompts the smart terminal to re-register the smart terminals.

Step 304: the current smart terminal such as the current mobile phone A sends an addition request to the server.

Here, when intended to add the mobile phone B, the mobile phone A sends the addition request to the server at first. The addition request includes: the user information of the mobile phone A and at least one piece of user information, such as a communication number, of the mobile phone B. The addition request is carried in the HTTP for transmission.

Step 305: the server receives the addition request of the mobile phone A, and analyzes and determines the addition request in the HTTP.

Step 306: the server looks up, in the database, the user information of the mobile phone B in the addition request of the mobile phone A, the flow goes to Step 307 if the user information of the mobile phone B exists in the database, and otherwise, the flow goes to Step 312.

Step 307: the server sends the addition request of the mobile phone A to the mobile phone B.

Step 308: after receiving the addition request and when agreeing to be added by the mobile phone A as a friend, the mobile phone B returns a response that indicates that the addition is agreed to the server.

Here, when disagreeing to be added by the mobile phone A as a friend, the mobile phone B returns a response that indicates that the addition is disagreed to the server.

Step 309: the server sends the mobile phone A the response to the addition request of the mobile phone A returned by the mobile phone B.

Here, after receiving the response that indicates that the addition is agreed of the mobile phone B, the server establishes a friend list for the mobile phone A, adds the user information of the mobile phone B in the friend list, and returns the friend list to the mobile phone A together with the response.

Step 310: the mobile phone A receives and displays the response that indicates that the addition is agreed or disagreed of the mobile phone B.

Here, the mobile phone A receives the response that indicates the addition is agreed of the mobile phone B, and displays the friend list including the mobile phone B. Then the server may determine that the friend relationship between the current smart terminal and the to-be-looked-up smart terminal has been successfully established.

Step 311: the current mobile phone A acquires and sends its own geographical location to the server, the friend mobile phone B acquires and sends its own geographical location to the server, and the server stores the location information of the mobile phones A and B for subsequent lookup by the server; the flow goes to Step 312.

Smart terminals acquire their own geographical locations through a Global Positioning System (GPS) or on the basis of Location Base Service (LBS).

Step 312: the current processing flow is ended.

As shown in Fig. 1, after Step 12, the method further includes:
Step 13: the server finds the current location information of the to-be-looked-up smart terminal according to an identifier of the to-be-looked-up smart terminal in the lookup request, and notifies the current location information to the current smart terminal.

Here, after receiving the lookup request of the current smart terminal, the server looks up the location information of the smart terminal with the identifier in the database by taking the identifier, such as information of the username, password, communication number and the like, of the to-be-looked-up smart terminal in the lookup request as an index, and notifies the location information to the current smart terminal when the location information is found.

After receiving location information of at least two to-be-looked-up smart terminals from the server, the current smart terminal displays its own geographical location and geographical locations of the at least two to-be-lookup-up smart terminals, so that geographical locations of multiple users may be displayed on the same smart terminal.

Here, when the server cannot find the corresponding to-be-looked-up smart terminal, the server notifies the current smart terminal, and the current smart terminal only displays or does not display its own geographical location.

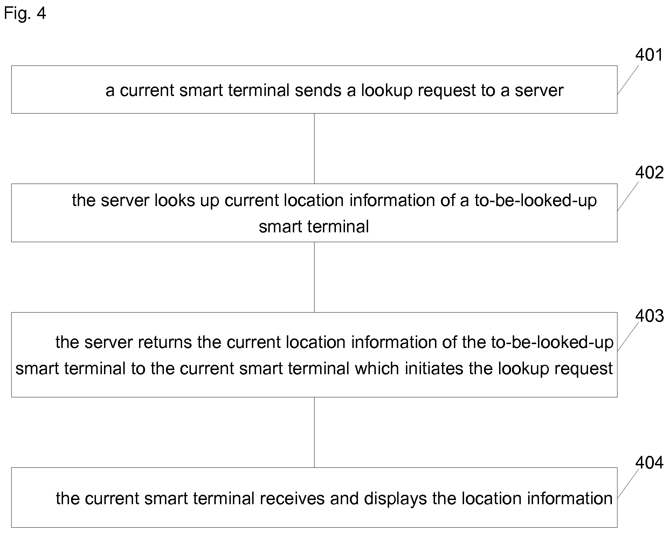

Fig. 4 is a diagram of a specific embodiment of Step 13 according to the disclosure. Step 13 is further described with reference to Fig. 4.

Here, the condition where the mobile phone B as the to-be-looked-up smart terminal exists in the friend list for the mobile phone A as the current smart terminal is taken as an example for description.

Step 401: when intended to look up and display the geographical location of the to-be-looked-up smart terminal such as the mobile phone B, the current smart terminal such as the mobile phone A sends the lookup request to the server.

Here, the lookup request contains the user information of the to-be-looked-up smart terminal, such as the communication number and username of the mobile phone B,.

Step 402: the server looks up the current location information of the to-be-looked-up smart terminal, i.e. the mobile phone B, in the database.

Here, the server determines latest registered location information of the to-be-looked-up smart terminal in the communication system as the current location information of the to-be-looked-up smart terminal. The server may also look up a geographical location of the mobile phone A and acquire the location information such as the distance between the mobile phones A and B, all possible routes and the shortest route by virtue of a geographical information system platform.

An acquisition manner adopted by the geographical information system platform is a conventional art, and will not be elaborated.

Here, the lookup request may further contain: a display scale of the geographical location of the mobile phone B input by the mobile phone A. Correspondingly, the server scales up or down the geographical location of the mobile phone B to the display scale after the location of the mobile phone B is found.

Step 403: the server returns the location information including the geographical locations of the current smart terminal and the to-be-looked-up smart terminal to the current smart terminal.

Here, the server returns the location information including the geographical locations of the mobile phones A and B to the mobile phone A.

Step 404: the current smart terminal, i.e. the mobile phone A, receives and displays the location information.

Here, each time when logging in a network, the current smart terminal and the to-be-looked-up smart terminal are required to report once own geographical locations to the server so as to update the locations of the terminals in real time.

The abovementioned solution is described with the condition that there are one current smart terminal and one to-be-looked-up smart terminal as an example. In addition, description for the condition that there are one current smart terminal and more than two to-be-looked-up smart terminals is similar to that of the abovementioned solution, and will not be elaborated.

In the case of only one current smart terminal initiating a lookup request and at least two to-be-looked-up smart terminals, the current smart terminal displays its own geographical location and geographical locations of the at least two to-be-looked-up smart terminals, so that the geographical locations of multiple users are displayed on the same terminal. As such, geographical locations of the multiple users are displayed on a same smart terminal, thus providing a traveller with convenience, increasing the practicability and convenience of the smart terminal.

An embodiment of the disclosure further records a computer storage medium, in which computer-executable instructions are stored, the computer-executable instructions being configured for implementing the abovementioned method for displaying a multiuser map at a server side.

An embodiment of the disclosure further records another computer storage medium, in which computer-executable instructions are stored, the computer-executable instructions being configured for implementing the abovementioned method for displaying a multiuser map at a smart terminal side.

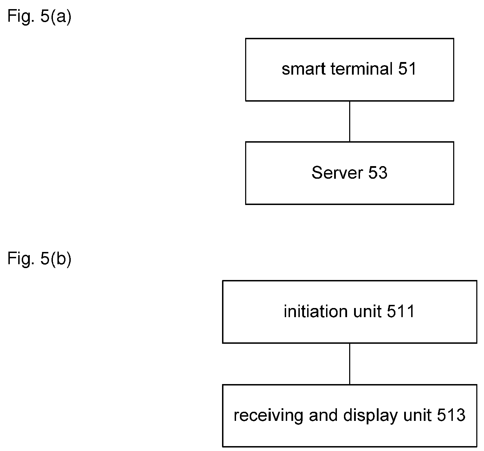

Based on the abovementioned method for displaying a multiuser map, the embodiment of the disclosure further records a system for displaying a multiuser map. As shown in Fig. 5(a), the system includes: a smart terminal 51 and a server 53, wherein
the smart terminal 51 is configured to initiate a lookup request for current location information of an to-be-looked-up smart terminal to the server 53, and
receive and display the current location information of the to-be-looked-up smart terminal returned by the server 53; and
the server 53 is configured to receive the lookup request, look up the current location information of the to-be-looked-up smart terminal according to an identifier of the to-be-looked-up smart terminal in the lookup request, and notify the current location information to the smart terminal 51.

Here, related description of a type and number of the smart terminal, user information of the terminal and the like involved in description of the system solution is the same as the description of the method, and will not be elaborated herein.

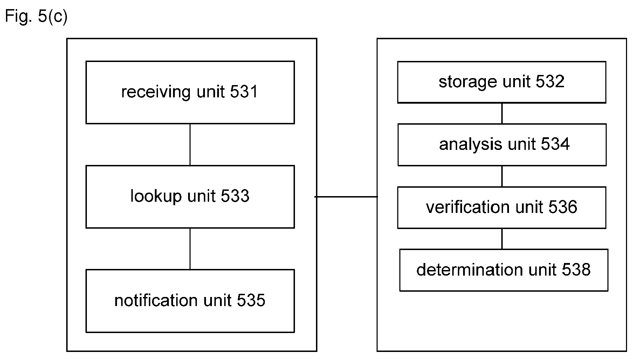

Preferably, as shown in Fig. 5(b) and Fig. 5(c), the smart terminal 51 includes: an initiation unit 511 and a receiving and display unit 513, and the server 53 includes: a receiving unit 531, a lookup unit 533 and a notification unit 535, wherein
the initiation unit 511 is configured to initiate the lookup request for the current location information of the to-be-looked-up smart terminal to the server 53, specifically the receiving unit 531, wherein the lookup request contains user information of the to-be-looked-up smart terminal;
the receiving unit 531 is configured to receive the lookup request and trigger the lookup unit 533;
the lookup unit 533 is configured to, when the current location information of the to-be-looked-up smart terminal is found in a database storing user information of smart terminals, trigger the notification unit 535.

Here, the lookup unit 533 determines latest location information which is reported by the to-be-looked-up smart terminal and registered in the server 53 as the current location information of the to-be-looked-up smart terminal, and determines latest location information which is reported by a current smart terminal, i.e. the smart terminal 51, and registered in the server 53 as current location information of the smart terminal 51.

Here, the lookup request may further contain: a display scale of a geographical location of the to-be-looked-up smart terminal required by the smart terminal 51. Correspondingly, the server 53, specifically the lookup unit 533, scales up or down the geographical location of the to-be-looked-up smart terminal to the display scale after the to-be-looked-up smart terminal is found.

The notification unit 535 is configured to return the location information to the smart terminal 51, specifically the receiving and display unit 513 of the smart terminal 51.

The receiving and display unit 513 is configured to receive and display the location information.

The server 53 further includes a determination unit 538, configured to determine that a friend relationship is established between the smart terminal 51 and the to-be-looked-up smart terminal. The determination unit 51 is further configured to determine that the smart terminal 51 and the to-be-looked-up smart terminal are both registered in a same communication system, specifically in a same server.

In the description of the system, since the determination unit 538 determines that the friend relationship has been established between the smart terminal 51 and the to-be-looked-up smart terminal, the smart terminal 51, specifically the receiving and display unit 513, may display a geographical location of a friend, and may also simultaneously display its own geographical location and the geographical location of the friend.

When a friend relationship has not been established between the smart terminal 51 and the to-be-looked-up smart terminal, a friend relationship has to be established prior to looking up the geographical location of the friend. Before the friend relationship is established, the smart terminal 51 and the to-be-looked-up smart terminal have to be registered in the server 53.

The server 53, specifically the determination unit 538, determines that the smart terminal 51, i.e., the current smart terminal and the to-be-looked-up smart terminal are both registered in a same communication network, specifically a same server, as described below.

As shown in Fig. 5(c), the server 53 further includes: a storage unit 532, an analysis unit 534 and a verification unit 536.

An initiation unit 511 of the smart terminal 51 and an initiation unit 511 of the to-be-looked-up smart terminal initiate registration requests to the server 53, specifically the receiving unit 531, respectively. The receiving unit 531 triggers the analysis unit 534 after receiving the registration requests of the smart terminals. The analysis unit 534 analyzes and determines the current received registration requests, and then notifies them to the verification unit 536. The verification unit 536 performs validity verification on user information of the terminals in the registration requests, for example, checking whether usernames of the smart terminal 51 and the to-be-looked-up smart terminal are valid and the same or not, and notifies the storage unit 532 to store the user information of the smart terminal 51 and the user information of the to-be-looked-up smart terminal respectively after the validity verification. Then, the notification unit 535 of the server 53 returns responses to registration request to the smart terminal 51 and the to-be-looked-up smart terminal which initiate the registration requests, specifically to the receiving and display unit 513 of the smart terminal 51 and the receiving and display unit 513 of the to-be-looked-up smart terminal. The receiving and display unit 513 of the smart terminal 51 receives and displays the response to registration request.

The responses to registration request indicate that the terminals which initiate registration requests have been successfully registered in the server 53.

When the smart terminal 51 is intended to add the to-be-looked-up smart terminal as a friend, the initiation unit 511 of the smart terminal 51 sends an addition request to the server 53, specifically to the receiving unit 531. The receiving unit 531 receives the addition request and triggers the analysis unit 534. The analysis unit 534 analyzes and determines the addition request which is currently received by the server 53, and then triggers the lookup unit 533. The lookup unit 533 looks up, in the storage unit 532, the user information of the to-be-looked-up smart terminal in the addition request of the smart terminal 51. When the user information is found, the notification unit 535 sends the addition request of the smart terminal 51 to the receiving and display unit 513 of the to-be-looked-up smart terminal.

When determining to agree the smart terminal 51 to add it the to-be-looked-up smart terminal as a friend or not after receiving the addition request, the receiving and display unit 513 of the to-be-looked-up smart terminal triggers the initiation unit 511 of the to-be-looked-up smart terminal to return a response that indicates the addition is agreed or a response that indicates the addition is disagreed to the server, specifically to the notification unit 535.

Here, after receiving the response that indicates the addition is agreed, the notification unit 535 triggers the storage unit 532 to establish and store a friend list for mobile phone A, adds the user information of the to-be-looked-up smart terminal in the friend list and returns the friend list to the receiving and display unit 513 of the smart terminal 51 together with the response. As such, the determination unit 538 determines that a friend relationship is established between the smart terminal 51 and the to-be-looked-up smart terminal.

The server 53, specifically the notification unit 535, sends the response to the smart terminal 51, specifically the receiving and display unit 513 of the smart terminal 51, and the receiving and display unit 513 receives and displays a response of the to-be-looked-up smart terminal.

The server 53 looks up the current location information of the to-be-looked-up smart terminal according to the identifier of the to-be-looked-up smart terminal in the lookup request and notifies the current location information to the smart terminal 51, i.e., the current smart terminal, as described below.

The smart terminal 51, specifically the initiation unit 511, sends the lookup request to the server 53, specifically the receiving unit 531. The receiving unit 531 receives the lookup request message,\ and triggers the analysis unit 534. The analysis unit 534 analyzes and determines the lookup request message currently received by the server 53 and then triggers the lookup unit 533. The lookup unit 533 looks up in the storage unit 532, and determines the latest registered location information of the to-be-looked-up smart terminal in the communication system as the current location information of the to-be-looked-up smart terminal. The lookup unit 533 also looks up the geographical location of the smart terminal 51, acquires the location information such as the distance between the smart terminal 51 and the to-be-looked-up smart terminal, all possible routes and the shortest route by virtue of a geographical information system platform, and transmits the found information to the notification unit 535. The notification unit 535 returns the location information to the smart terminal 51, specifically the receiving and display unit 513 of the smart terminal 51. The receiving and display unit 513 receives and displays the current location information of the to-be-looked-up smart terminal.

In practical applications, all of the receiving unit 531, the lookup unit 533, the notification unit 535, the storage unit 532, the analysis unit 534, the verification unit 536 and the determination unit 538 may be implemented by a Central Processing Unit (CPU), a Digital Signal Processor (DSP), a Micro-Processor Unit (MPU), a Field Programmable Gate Array (FPGA) and the like; and the CPU, the DSP, the MPU and the FPGA may all be arranged in the server.

In practical applications, both the initiation unit 511 and the receiving and display unit 513 may be implemented by a CPU, or a DSP, or an MPU, or an FPGA or the like; and the CPU, the DSP, the MPU and the FPGA may all be arranged in the smart terminal.

Those skilled in the art should understand that functions realized by each processing module in the device for displaying a multiuser map as shown in Fig. 5(a), 5(b) and 5(c) may be understood with reference to the related description of the method for displaying a multiuser map. Those skilled in the art should know that the functions of each processing unit in the device for displaying a multiuser map as shown in Fig. 5(a), 5(b) and 5(c) may be implemented by a program running in a processor, and may also be implemented by a specific logic circuit.

Those skilled in the art should understand that the embodiment of the disclosure may be provided as a method, a system or a computer program product. Therefore, the disclosure may adopt a form of pure hardware embodiment, pure software embodiment and combined software and hardware embodiment. Moreover, the disclosure may adopt a form of computer program product implemented on one or more computer-available storage media (including, but not limited to, a disk memory, a Compact Disc Read-Only Memory (CD-ROM) and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

According to the method, server, smart terminal and system, as well as the storage medium for displaying a multiuser map recorded in the embodiments of the disclosure, after receiving a lookup request from a smart terminal, the server looks up current location information of a to-be-looked-up smart terminal according to an identifier of the to-be-looked-up smart terminal in the lookup request, and notifies the location information to the smart terminal. Utilization of the method allows for geographical locations of multiple users to be displayed on a same smart terminal, thus providing a traveller with convenience, increasing the practicability and convenience of the smart terminal, and enhancing visual experience for a user of the smart terminal.

The above are the preferred embodiments of the disclosure, but not intended to limit the scope of protection of the disclosure.

## Claims

1. A method for displaying a multiuser map, comprising:
after a lookup request is received from a smart terminal, looking up current location information of a to-be-looked-up smart terminal according to an identifier of the to-be-looked-up smart terminal in the lookup request, and notifying the location information to the smart terminal.

2. The method for displaying a multiuser map according to claim 1, further comprising: before the lookup request is received from the smart terminal,
determining that a friend relationship is established between the smart terminal and the to-be-looked-up smart terminal.

3. The method for displaying a multiuser map according to claim 1, further comprising: before the lookup request is received from the smart terminal,
determining that the smart terminal and the to-be-looked-up smart terminal are both registered in a same communication system.

4. The method for displaying a multiuser map according to any one of claims 1 to 3, wherein looking up the current location information of the to-be-looked-up smart terminal comprises:
determining latest location information which is reported by the to-be-looked-up smart terminal and registered in the communication system as the current location information of the to-be-looked-up smart terminal.

5. A server, comprising: a receiving unit, a lookup unit and a notification unit, wherein
the receiving unit is configured to receive a lookup request for current location information of a to-be-looked-up smart terminal from a smart terminal, and trigger the lookup unit;
the lookup unit is configured to look up the current location information of the to-be-looked-up smart terminal according to an identifier of the to-be-looked-up smart terminal in the lookup request; and
the notification unit is configured to notify the current location information of the to-be-looked-up smart terminal to the smart terminal which initiates the lookup request.

6. The server according to claim 5, further comprising: a determination unit, configured to determine that a friend relationship is established between the smart terminal and the to-be-looked-up smart terminal.

7. The server according to claim 6, wherein the determination unit is further configured to determine that the smart terminal and the to-be-looked-up smart terminal are both registered in a same communication system.

8. The server according to any one of claims 5 to 7, wherein the lookup unit is further configured to determine latest location information which is reported by the to-be-looked-up smart terminal and registered in the communication system as the current location information of the to-be-looked-up smart terminal.

9. A method for displaying a multiuser map, comprising:
initiating a lookup request for current location information of a to-be-looked-up smart terminal; and
receiving and displaying the current location information of the to-be-looked-up smart terminal.

10. A smart terminal, comprising: an initiation unit and a receiving and display unit, wherein
the initiation unit is configured to initiate a lookup request for current location information of a to-be-looked-up smart terminal; and
the receiving and display unit is configured to receive and display the current location information of the to-be-looked-up smart terminal.

11. A system for displaying a multiuser map, comprising: a server and a smart terminal, wherein
the smart terminal is configured to initiate a lookup request for current location information of a to-be-looked-up smart terminal, and
receive and display the current location information of the to-be-looked-up smart terminal; and
the server is configured to receive the lookup request, look up the current location information of the to-be-looked-up smart terminal according to an identifier of the to-be-looked-up smart terminal in the lookup request, and notify the current location information to the smart terminal.

12. A computer storage medium, in which computer-executable instructions are stored, the computer-executable instructions being configured to execute the method for displaying a multiuser map according to any one of claims 1 to 4.

13. A computer storage medium, in which computer-executable instructions are stored, the computer-executable instructions being configured to execute the method for displaying a multiuser map according to claim 9.
